# EUROPÄISCHE PATENTSCHRIFT

(11) **EP 1 359 290 B1**
(45) Veröffentlichungstag und Bekanntmachung des Hinweises auf die Patenterteilung: **15.03.2006**
(21) Anmeldenummer: 03001907.9
(22) Anmeldetag: 30.01.2003
(51) Int. Cl.: F01D 25/00

(54) **Anordnung zur Reinigung von Turbinen von Abgasturboladern**
Cleaning arrangement for turbocharger turbines
Dispositif de nettoyage de turbines de turbocompresseur

(30) Priorität: 18.04.2002 DE 10217225
(43) Veröffentlichungstag der Anmeldung: 05.11.2003
(73) Patentinhaber: Caterpillar Motoren GmbH & Co. KG, 24159 Kiel (DE)
(72) Erfinder: Heintze, Wolfgang, 24119 Kronshagen (DE)
(74) Vertreter: Hansmann, Dierk

(56) Entgegenhaltungen:
- DE-A- 19 549 142
- DE-A- 19 605 308
- US-A- 2 881 102
- US-A- 5 125 377

## Beschreibung

Die Erfindung bezieht sich auf eine Anordnung zur Reinigung von Turbinen von Abgasturboladern in der Betriebsphase von aufgeladenen mehrzylindrigen Brennkraftmaschinen als V-Motoren für Schwerölbetrieb mit parallel angeordneten Abgasturboladern.

Es ist bekannt, Brennkraftmaschinen mit mehreren Abgasturboladern zu bestücken und gegebenenfalls beispielsweise bei Wartungsarbeiten einen Abgaslader außer Betrieb zu setzen. Hierbei kommt es aber zu einem erheblichen Leistungsabfall, der unerwünscht ist.

Insbesondere bei stationären Anordnungen von Brennkraftmaschinen, wie beispielsweise Kraftstationen zur Stromerzeugung, hat sich gezeigt, daß durch die entsprechenden Aufstellungsorte und schlechte Rückstandskraftstoffe oftmals starke Verschmutzungen der Turbolader auftreten, die die Funktionsfähigkeit beeinträchtigen. Zu diesem Zweck ist es bekannt, eine Thermoschockreinigung der Turbolader im Betrieb mit hoher Leistung durchzuführen. Diese Maßnahmen haben sich als nicht ausreichend erwiesen, so daß nur eine Niedriglast bzw. Leerlaufwäsche durchführbar ist, um die Turbine zu reinigen. Somit steht keine Leistung für den Netzbetrieb zur Verfügung .

Eine Thermoschockreinigung einer Abgasturboladerturbine ist nach der DE-A-195 49 142 bekannt, aber in der Praxis für derartige Reinigungszwecke nicht ausreichend.

Ferner ist aus der DE-A-196 05 308 bekannt, getrennte Ladeluft- und Abgassammelleitungen mit zugeordneten Abgasturboladern anzuordnen, wobei über einen Sammler mittels einer steuerbaren Klappe, die den Sammler-Innenraum in Teilvolumina mit zündfolgerichtig angeordnete Einlaßleitungen zur Drehmomentanhebung unterteilt.

Die Aufgabe der Erfindung ist es, eine Turbinenwäsche der Turbolader bei derartigen schwerölbetriebenen Anlagen nacheinander bei Niedriglast zu ermöglichen und dabei eine möglichst hohe Restleistung zu gewährleisten.

Die Lösung dieser Aufgabe erfolgt erfindungsgemäß durch die Merkmalskombination im Patentanspruch 1.

Hierdurch ist es möglich, während betriebsschwacher Perioden eine Arbeitsbank stillzulegen und somit den zugehörigen Turbolader in Niedriglastbetrieb zu setzen, um eine Reinigung durchzuführen. Da auch ein kurzzeitiger Betrieb der aktiven Arbeitsbank mit Überlast möglich ist, sind bei der Turbinenreinigung Leistungen im Bereich von 65 % der Normalleistung erreichbar.

Ferner ist zu berücksichtigen, daß keine aufwendigen Steuerungen erforderlich sind.

Eine günstige Ausbildung wird dadurch erreicht, daß die Ladeluftleitung zwischen den Arbeitsbänken als gemeinsame Leitung mit einer Trennwand ausgebildet ist.

Ferner wird vorgeschlagen, daß die Brennstoffversorgung jeder Arbeitsbank über Pumpenstoppzylinder der Einspritzpumpen auf Leerlaufbetrieb einstellbar ist. In der Zeichnung ist ein Ausführungsbeispiel der Erfindung schematisch dargestellt. Es zeigen:

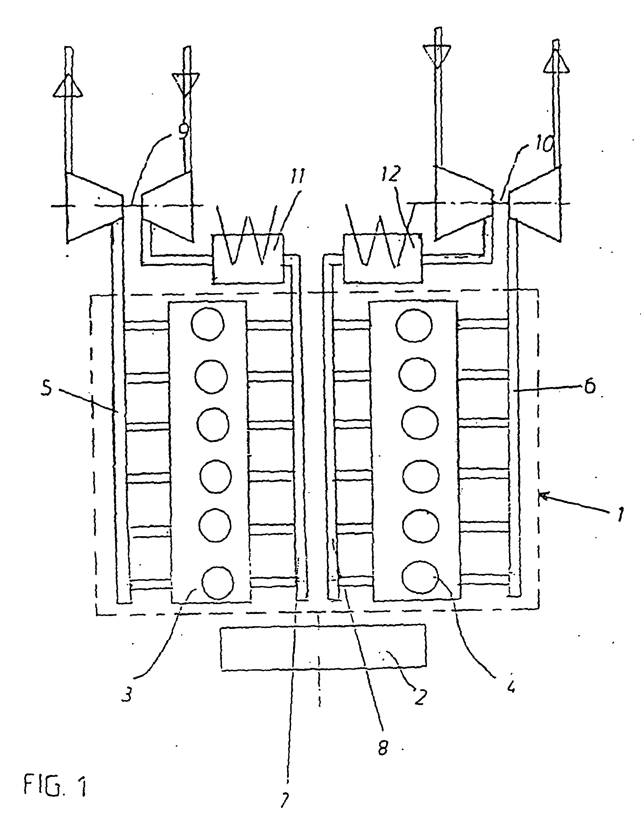

- Fig. 1: eine prinzipielle Schaltungsanordnung des Aufbaus;
- Fig. 2: einen Schnitt durch einen Motor mit geteilter Ladeluftleitung.

Der dargestellte V-Motor 1 mit seiner Schwungscheibe 2 besitzt entsprechende Arbeitsbänke 3 und 4, die jeweils getrennte Ladeluftsammelleitungen 5 und 6 sowie Abgassammelleitungen 7 und 8 aufweisen.

Den Ladeluft- und Abgassammelleitungen 7 und 8 sowie 5 und 6 sind entsprechende Turbolader 9 und 10 zugeordnet, wobei Wärmetauscher 11, 12 den Ladeluftsammelleitungen 7, 8 vorgeschaltet sind. Hierdurch ist wird thermodynamische Trennung der beiden Arbeitsbänke 3 und 4 durchführbar.

Um eine. Reinigung eines Turboladers 9 bzw. 10 durchzuführen, wird über eine reduzierte Brennstoffversorgung eine Arbeitsbank 3 oder 4 auf Leerlauf geschaltet, wobei der Betrieb der nicht abgeschalteten Arbeitsbank weiterhin mit Vollast bzw.

Überlast erfolgt, so daß mit einer geringeren Leistung der Betrieb aufrechterhalten werden kann.

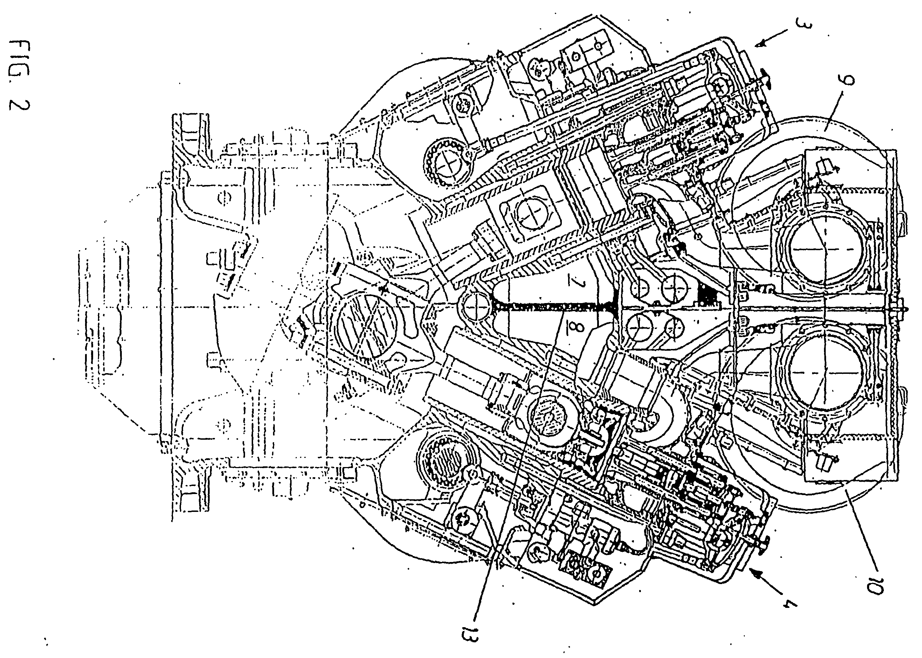

Gemäß Fig. 2 ist eine gemeinsame Ladeluftleitung dargestellt, wobei über eine Trennwand 13 entsprechende getrennte Ladeluftleitungen 7 und 8 gebildet werden.

## Patentansprüche

1. Anordnung zur Reinigung von Turbinen von Abgasturboladern (9, 10) in der Betriebsphase von aufgeladenen mehrzylindrigen Brennkraftmaschinen als v-Motoren für Schwerölbetrieb mit parallel angeordneten Abgasturboladern (9, 10), von denen mindestens ein Abgasturbolader (9, 10) in einen Leerlaufbetrieb schaltbar ist, wobei jede Arbeitsbank (3, 4) des V-Motors (1) getrennte Ladeluft- und Abgassammelleitungen (7, 8 und 5, 6) mit zugeordneten Turboladern (9, 10) zur thermodynamischen Trennung aufweist, wobei die Brennstoffversorgung jeder . Arbeitsbank (3, 4) während der Reinigung des zugeordneten Abgasturboladers (9, 10) eine auf Leerlaufbetrieb reduzierte Brennstoffversorgung aufweist.

2. . Anordnung nach Anspruch 1, **dadurch gekennzeichnet, daß** die Ladeluftleitung (7, 8) zwischen den Arbeitsbänken (3, 4) als gemeinsame Leitung mit einer Trennwand (13) ausgebildet ist.

3. Anordnung nach Anspruch 1 oder 2, **dadurch gekennzeichnet, daß** die Brennstoffversorgung jeder Arbeitsbank (3, 4) über Pumpenstoppzylinder der Einspritzpumpen auf Leerlaufbetrieb einstellbar ist.

## Claims

1. Arrangement for cleaning turbines of exhaust gas turbochargers (9, 10) in the operating phase of super-charged multi-cylinder combustion engines as V-type engines for heavy-oil operation with parallel arranged exhaust gas turbochargers (9, 10), at least one exhaust gas turbocharger (9, 10) of which can be switched to idle operation, each bank (3, 4) of the V-type engine (1) having separate charged air and exhaust gas collection pipes (7, 8 and 5, 6) with associated turbochargers (9, 10) for thermodynamic separation, the fuel supply of each bank (3, 4) during cleaning of the associated exhaust gas turbocharger (9, 10) having a fuel supply reduced to idle operation.

2. Arrangement according to claim 1, **characterised in that** the charged air pipe (7, 8) between the banks (3, 4) is designed as a joint pipe with a dividing wall (13).

3. Arrangement according to claim 1 or 2, **characterised in that** the fuel supply of each bank (3, 4) can be adjusted to idle operation by means of pump stop cylinders on the injection pumps.

## Revendications

1. Agencement de nettoyage de turbines de turbocompresseurs à gaz d'échappement (9, 10) lors du fonctionnement de moteurs à plusieurs cylindres, suralimentés et configurés comme moteurs en V qui fonctionnent à l'huile lourde et qui présentent des turbocompresseurs à gaz d'échappement (9, 10) agencés en parallèle, l'un au moins des turbocompresseurs à gaz d'échappement (9, 10) pouvant fonctionner à vide, dans lequel pour permettre un découplage thermodynamique, chaque banc de travail (3, 4) du moteur en V (1) présente des collecteurs séparés d'air de suralimentation et de gaz d'échappement (7, 8 et 5, 6) auxquels sont associés des turbocompresseurs (9, 10) et dans lequel on réduit l'alimentation en carburant de chaque banc de travail (3, 4) est réduite au niveau de fonctionnement à vide lors du nettoyage du turbocompresseur de gaz d'échappement (9, 10) qui lui est associé.

2. Agencement selon la revendication 1, **caractérisé en ce qu'**entre les bancs de travail (3, 4), le conduit d'air de suralimentation (7, 8) est configuré comme conduit commun doté d'une paroi de séparation (13).

3. Agencement selon les revendications 1 ou 2, **caractérisé en ce que** l'alimentation en carburant de chaque banc de travail (3, 4) peut être réglée au niveau de fonctionnement à vide au moyen de cylindres d'arrêt de pompage des pompes d'injection.
